# EUROPÄISCHE PATENTANMELDUNG

(11) **EP 4 527 662 A1**
(43) Veröffentlichungstag der Anmeldung: **26.03.2025**
(21) Anmeldenummer: 24199406.0
(22) Anmeldetag: 10.09.2024
(51) Int. Cl.: B60K 35/10, B60K 35/21, B60K 35/40, G06F 3/044, G06F 3/0488, G09G 3/34, H05K 5/00, H05K 7/14

(54) **BEDIENVORRICHTUNG INSBESONDERE FÜR EIN FAHRZEUG**

(30) Priorität: 20.09.2023 DE 102023125534
(71) Anmelder: Huf Hülsbeck & Fürst GmbH & Co. KG, 42551 Velbert (DE)
(72) Erfinder: Chabrowski, Christian, 45472 Mülheim an der Ruhr (DE)

(57) **Zusammenfassung**

Bedienvorrichtung, insbesondere für ein Fahrzeug, umfasst:
ein Gehäuse, welches ein oberes Gehäuseteil und ein unteres Gehäuseteil aufweist, wobei zwischen dem oberen Gehäuseteil und dem unteren Gehäuseteil ein elastisch verformbares Verbindungelement angeordnet ist, wobei das obere Gehäuseteil einen lichtdurchlässigen Bedienbereich mit einer Oberseite aufweist,
ein Display mit einem Targetelement, welches auf einer der Oberseite gegenüberliegenden Seite am Bedienbereich verbunden ist, wobei auf dem Display ein virtuelles Bedienelement anzeigbar ist; wobei bei einer Bedienung des Nutzers auf dem Display das obere Gehäuseteil zumindest partiell relativ zum unteren Gehäuseteil bewegbar ist,
ein Sensor zum Erfassen der relativen Bewegung des oberen Gehäuseteils zum unteren Gehäuseteil.

## Beschreibung

Die Erfindung betrifft eine Bedienvorrichtung insbesondere für ein Fahrzeug.

In vielen Bereichen der Elektronik, insbesondere der Unterhaltungselektronik und Kraftfahrzeugelektronik, werden vermehrt berührungsempfindliche Bedienvorrichtungen eingesetzt. Die Bedienvorrichtungen werden typischerweise als Touchpad oder zusammen mit einer Anzeigevorrichtung als Touchscreen in elektronischen Geräten verwendet. Auch kommen derartige berührungsempfindliche Bedienvorrichtungen in Kraftfahrzeugen im Innen- und/oder Außenbereich zum Einsatz, beispielsweise als Bestandteil der Interieure oder Exterieure bzw. an der Fahrzeugaußenhaut wie B-Säule,Tür oder Klappe. Der Preis von einem Touchscreendisplay ist jedoch hoch.

Es ist die Aufgabe der vorliegenden Erfindung, eine einfach konstruierte und flexibel einsetzbare Bedienvorrichtung mit einer Anzeigevorrichtung, insbesondere für ein Fahrzeug, bereitzustellen, die kostengünstig ist und wenig Energie verbraucht.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe wird durch eine Bedienvorrichtung, insbesondere für ein Fahrzeug, gelöst, die umfasst:
ein Gehäuse, welches ein oberes Gehäuseteil und ein unteres Gehäuseteil aufweist, wobei zwischen dem oberen Gehäuseteil und dem unteren Gehäuseteil ein elastisch verformbares Verbindungelement angeordnet ist, wobei das obere Gehäuseteil einen lichtdurchlässigen Bedienbereich mit einer Oberseite aufweist, ein Display mit einem Targetelement, welches auf einer der Oberseite gegenüberliegenden Seite am Bedienbereich verbunden ist, wobei auf dem Display ein virtuelles Bedienelement anzeigbar ist; wobei bei einer Bedienung des Nutzers auf dem Display das obere Gehäuseteil zumindest partiell relativ zum unteren Gehäuseteil bewegbar ist, einen Sensor zum Zusammenwirken mit dem Targetelement, welcher dazu eingerichtet ist, die relative Bewegung des oberen Gehäuseteils zum unteren Gehäuseteil zu erfassen.

Der Kerngedanke der vorliegenden Erfindung liegt drin, dass durch die Kombination aus einem ursprünglich nicht berührungsempfindlichen Display, welches kostengünstiger als ein Touchscreendisplay ist, und einem auf der Bedienkraft empfindlich reagierenden Sensor dem Nutzer das Erlebnis ermittelt, dass er gerade an ein berührungsempfindliches Display bedient. Das Gehäuse kann beispielsweise in der Schalenbauweise ausgebildet sein. Die obere Schale und die untere Schale kann über ein elastisch verformbares Kunststoffmaterial verbunden sein, welches durch dessen elastische Verformbarkeit dafür sorgt, dass unter der Bedienkraft des Nutzers die obere Schale sich relativ zur unteren Schale bewegen kann. Für den Bedienbereich können Glas- oder Kunststoffschichten zum Einsatz kommen. Der Nutzer drückt das virtuelle Bedienelement über den beispielsweise aus der Glas- oder Kunststoffschichten ausgebildeten Bedienbereich, damit eine direkte Krafteinwirkung aufs zerbrechliche Display unterbunden ist und das Display darunter beschützt bleibt. Die Bedienkraft bzw. die Bedienhandlung wird wiederum auf das Targetelement übertragen. Infolgedessen bewegt sich das Targetelement zumindest partiell zum Sensor. Bei der relativen Bewegung des Targetelements zum Sensor wird der Eigenschaftsparameter des Sensors geändert, sodass der Sensor die Bedienhandlung des Nutzers detektieren kann.

In einer bevorzugten Ausführung der Erfindung ist das Display ein bistabiles elektrophoretisches Display. Elektrophoretische Displays sind grundsätzlich bekannt. Derartige elektrophoretische Displays weisen eine Struktur auf, bei der zwei Elektrodensubstrate, von denen wenigstens eine sichtseitige Elektrode transparent ist, voneinander beabstandet angeordnet sind. Zwischen diesen Elektroden befindet sich eine Flüssigkeit, in welcher Partikel aufgenommen sind. Die Elektroden bilden eine räumliche, zweidimensionale Struktur, die eine pixelweise Anordnung zur Aktivierung gegenüberliegender Elektrodenabschnitte erlaubt. Durch das Anlegen eines elektrischen Feldes in einem Pixel kann dann in den Partikeln, die in der Flüssigkeit mobil sind, eine Ausrichtung oder Bewegung im elektrostatischen Feld erreicht werden. Bei einigen Displayarten werden die Partikel mit einer Farbseite in Sichtrichtung orientiert, bei anderen Displayarten werden unterschiedliche Partikelarten gemäß der Feldverteilung in Feldrichtung sortiert, so dass der optische Eindruck bei Aufsicht in Abhängigkeit von dem anliegenden Feld variiert werden kann. Derartige elektrophoretische Displays haben den Vorteil, dass sie einen äußerst geringen Energiebedarf haben und außerdem ihren Anzeigezustand nach Wegnahme der Spannungsversorgung halten können. Entsprechend kann die Anzeigeeinrichtung mit zugeordneten Pufferspeichern arbeiten, die im Betrieb des Fahrzeuges von einer zentralen Energieversorgung des Fahrzeuges gespeist und aufgeladen werden. Bei Stillstand des Fahrzeuges kann dann die Anzeigeeinrichtung autonom, ggf. völlig ohne Zugriff auf die fahrzeugseitige Energieversorgung, die Anzeige schalten.

In einer Weiterbildung der Erfindung ist es denkbar, dass der Sensor ein induktiver Sensor ist und das Targetelement ein elektrisch leitendes Element ist, wobei bei der Bedienung des Nutzers auf dem Bedienbereich der Abstand zwischen dem elektrisch leitenden Element und dem induktiven Sensor zumindest partiell änderbar ist, wodurch die Induktivität änderbar ist. Bspw. wird ein Schwingkreis hinsichtlich der Frequenz ausgewertet, um die Induktivitätsveränderung zu erfassen. Die Bedienhandlung auf dem virtuellen Bedienelement wird somit erfasst.

Es ist denkbar, dass mindestens zwei virtuelle Bedienelemente auf dem Display anzeigbar sind, wobei die zumindest zwei virtuelle Bedienelemente in einer Reihe ausgebildet sind und für die Reihe zwei induktiven Sensoren zugeordnet sind. Durch den Differenzvergleich der Induktivitätsänderung der jeweiligen Sensoren wird ermittelt, welches Bedienelement durch den Nutzer aktiviert wird.

In einer alternativen Gestaltung ist es denkbar, dass der Sensor ein kapazitiver Sensor ist und das Targetelement ein elektrisch leitendes Element ist, wobei bei der Bedienung des Nutzers auf dem Bedienbereich der Abstand zwischen dem elektrisch leitenden Element und dem kapazitiven Sensor zumindest partiell änderbar ist, wodurch die Kapazität änderbar ist. Dabei wird die Abstandsänderung anhand einer Kapazitätsänderung erfasst. Der Sensor verhält sich z.B. hierbei als eine Messelektrode, und das elektrisch leitende Element als eine Referenzelektrode. Die Bedienhandlung auf dem virtuellen Bedienelement wird somit erfasst.

Es ist denkbar, dass mindestens zwei virtuelle Bedienelemente auf dem Display anzeigbar sind, wobei die zumindest zwei virtuelle Bedienelemente in einer Reihe ausgebildet sind und für die Reihe zwei kapazitive Sensoren zugeordnet ist. Durch den Differenzvergleich der Kapazitätsänderung der jeweiligen Sensoren wird ermittelt, welches Bedienelement durch den Nutzer aktiviert wird.

Vorteilhaft kann das Targetelement eine an der der Sichtseite gegenüberliegenden des Displays integrierte Reflexionsfolie sein. Das auf der Sichtseite des beispielsweise nicht selbst leuchtenden Displays gestrahlte Licht wird in Richtung Leuchtenausgang von der Reflexionsfolie reflektiert, sodass der Energiebedarf des Displays gering bleibt. Die Reflexionsfolie kann eine Metallfolie oder eine leitende Kunststofffolie sein.

Alternativ ist es denkbar, dass das Targetelement eine separate elektrisch leitende insbesondere metallische Folie ist, die an der der Sichtseite gegenüberliegenden Seite des Displays befestigt ist, insbesondere formschlüssig und/oder kraftschlüssig und/oder stoffschlüssig, z.B. durch Ankleben und/oder Verschrauben und/oder Verklipsen. Dadurch kann das leitende Element flexibler gestaltet und einsetzt werden.

Ferner ist denkbar, dass das Targetelement während der Bedienung des Nutzers auf dem Display bestromt ist. Damit das Targetelement ein Potential besitzt und durch dessen Bewegung das elektromagnetische Feld vor einem induktiven Sensor änderbar ist oder als eine Referenzelektrode vor einem kapazitiven Sensor funktionieren kann.

Vorteilhafte Verwendungen einer Bedienvorrichtung, welche wie oben beschrieben ausgeführt sein kann, können zum Erfassen einer Bedienhandlung, insbesondere einer Berührung der Bedieneinheit, an einer B-Säule, einem Griff, einem Emblem, einer Klappe, einem Spiegel, einem Dachelement, einem Betätigungselement, einer Instrumententafel, einer Konsole usw. an einem Fahrzeug oder im Fahrzeuginnenraum bereitgestellt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigt:
Fig.1 perspektive Ansicht einer erfindungsgemäßen Bedienvorrichtung
Fig.2 Seitenschnittansicht des Bedienvorrichtung der Fig.1
Fig.3 Schemaskizze des Bedienbereichs einer weiteren erfindungsgemäßen Bedienvorrichtung
Fig.4 Signalverlaufsdiagramm der Sensoren der Bedienvorrichtung gemäß der Fig. 3 bei der Betätigung eines Bedienelements
Fig.5 Signalverlaufsdiagramm der Sensoren der Bedienvorrichtung gemäß der Fig. 3 bei der Betätigung eines weiteren Bedienelements
Fig.6 Signalverlaufsdiagramm der Sensoren der Bedienvorrichtung gemäß der Fig. 3 bei der Betätigung eines weiteren Bedienelements
Fig.7 Schemaskizze des Bedienbereichs einer weiteren erfindungsgemäßen Bedienvorrichtung
Fig.8 Signalverlaufsdiagramm der Sensoren der Bedienvorrichtung gemäß der Fig. 3 bei der Betätigung eines Bedienelements
Fig.9 Signalverlaufsdiagramm der Sensoren der Bedienvorrichtung gemäß der Fig. 7 bei der Betätigung eines weiteren Bedienelements
Fig.10 Signalverlaufsdiagramm der Sensoren der Bedienvorrichtung gemäß der Fig. 7 bei der Betätigung eines weiteren Bedienelements
Fig.11 Signalverlaufsdiagramm der Sensoren der Bedienvorrichtung gemäß der Fig. 7 bei der Betätigung eines weiteren Bedienelements
Fig.12 Signalverlaufsdiagramm der Sensoren der Bedienvorrichtung gemäß der Fig. 7 bei der Betätigung eines weiteren Bedienelements
Fig.13 Signalverlaufsdiagramm der Sensoren der Bedienvorrichtung gemäß der Fig. 7 bei der Betätigung eines weiteren Bedienelements

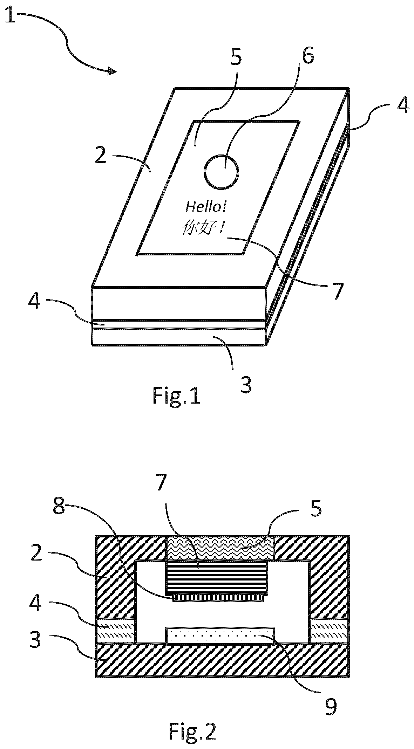

In der Fig. 1 ist eine erfindungsgemäße Bedienvorrichtung 1 gezeigt, an der die vorliegende Erfindung verwirklicht ist. Die Bedienvorrichtung weist ein oberes Gehäuseteil 2 und ein unteres Gehäuseteil 3 auf. Zwischen dem oberen Gehäuseteil 2 und dem unteren Gehäuse 3 ist ein elastisch verformbares Kunststoffmaterial 4 angeordnet. Das obere Gehäuseteil 2 weist einen lichtdurch-lässigen Bedienbereich 5 aus einer Glasschicht auf. Auf der gegenüberliegenden Seite ist ein Display 7 am Bedienbereich 5 befestigt. Die Sichtseite des Displays 7 ist durch den lichtdurchlässigen Bedienbereich 5 zu sehen. Auf dem Display 7 ist ein virtuelles Bedienelement 6 angezeigt. Das Bedienelement 6 kann z.B. ein Knopf sein. Wenn der Nutzer auf das Bedienelement drückt, bewegen sich das obere Gehäuseteils bzw. das Display 7 unter der Bedienkraft aufgrund der elastischen Verformbarkeit des Kunststoffmaterials 4 relativ zum unteren Gehäuseteil. Durch eine Bedienhandlung eines Benutzers auf dem virtuellen Bedienelement 6 wird beispielsweise ein Öffnungssignal oder ein Verriegelungssignal der Tür veranlasst. Auf dem Display 7 kann noch weitere interaktive Information angezeigt werden.

Die Fig. 2 zeigt die Seitenschnittansicht des Bedienvorrichtung 1 der Fig.1. In der Fig. 2 ist ersichtlich, dass an der der Sichtseite gegenüberliegenden Seite ein Targetelement 8 am Display 7 befestigt ist. Alternativ ist es auch denkbar, dass ein Targetelement einteilig im Display 7 integriert ist, beispielsweise in Form einer Reflexionsfolie. Am unteren Gehäuseteil 3 ist eine Leiterplatte 9 angeordnet, worauf ein Sensor, beispielsweise ein induktiver oder kapazitiver Sensor angeordnet ist, welcher in der Seitenschnittansicht nicht zu sehen ist. Während des relativen Bewegungsvorgangs des Targetelement 8 zum Sensor wird die Eigenschaftsparameter des Sensors, beispielsweise die Induktivität oder Kapazität, beeinflusst bzw. deren Änderung erfasst.

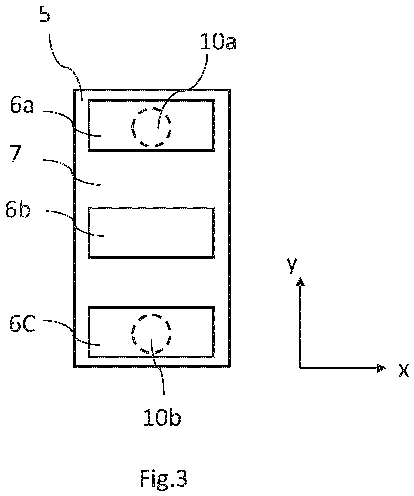

Die Fig 3 zeigt den Bedienbereich 5 einer alternativen Bedienvorrichtung 1 gemäß der vorliegenden Erfindung. Durch den lichtdurchlässigen Bereich 5 ist ein Display 7 mit drei virtuellen Bedienelemente 6a, 6b und 6c zu sehen, wobei die drei Bedienelemente in einer Reihe angeordnet sind, die in der Fig. 3 in der Y-Richtung ausgerichtet wird. Zu dieser Reihe sind zwei Sensoren erforderlich zugeordnet. Wie im Beispiel gemäß der Fig. 2 ist ein Targetelement (nicht angezeigt in der Fig.3) am Display befestigt, welches alle drei Bedienelemente abdeckt, damit die Bedienhandlung auf allen Bedienelementen auf die Bewegung des Targetelements umgewandelt werden kann. Am unteren Gehäuseteil sind zwei Sensoren 10a und 10b auf einer Leiterplatte (nicht angezeigt in der Fig.3) angeordnet.

Beispielhaft handelt sich bei den Sensoren 10a und 10b um induktive Sensoren. Das Targetelement ist eine elektrisch leitende Folie und dessen Bewegung beeinflusst die Induktivität der induktiven Sensoren 10a und 10b. Die zwei Sensoren 10a und 10b sind mit gestrichelten Linien dargestellt. Die Darstellung der Sensoren 10a und 10b in Fig. 3 dient nur dazu, die relativen Positionen der Sensoren 10a und 10b zu den Bedienelementen zu illustrieren. Jedoch zeigt die Darstellung nicht die einzige Möglichkeit, wie die Sensoren positioniert werden können, damit die Bedienvorrichtung funktionsfähig in Betrieb gebracht wird. In der Fig. 3 befindet sich der Sensor 10a in Draufsicht auf dem Bedienbereich betrachtet unter dem Bedienelement 6a, während der Sensor 10b sich unter dem Bedienelement 6c befindet. Wenn der Nutzer auf einen von den Bedienelementen 6a, 6b und 6c drückt, ändert sich der Abstand zwischen der Leiterplatte, wo die Sensoren 10a und 10b fest angeordnet sind, und dem Targetelement. Das Targetelement bewegt sich nicht parallel zur Leiterplatte. Je mehr Bedienkraft auf dem Targetelement partiell einwirkt, desto mehr bewegt sich die entsprechende Stelle des Targetelement zur Leiterplatte.

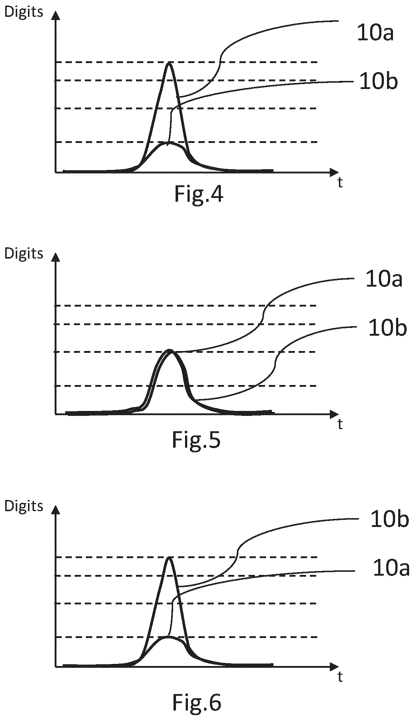

Die Fig.4 bis 6 zeigen die Signalverlaufsdiagramme der Bedienvorrichtung gemäß der Fig. 3 in drei Situationen, wo die virtuelle Bedienelemente 6a, 6b und 6c jeweils gedrückt werden. Hierbei kann sich das Signal je nach fachmännischen Auswerteverfahren um ein Spannungs- oder Frequenz- oder Phasensignal handeln. In der Fig. 4 ist das Bedienelement 6a gedrückt. Die Signalstärke des Sensors 10a ist deutlich höher als die Signalstärke des Sensors 10b, weil die Abstandsänderung zwischen dem Sensor 6a und dem Targetelement größer als die Abstandsänderung zwischen dem Sensor 6b und dem Targetelement ist. Mit anderen Worten wirkt mehr Bedienkraft auf dem Targetelement an der entsprechenden Stelle des Sensor 6a als an der entsprechenden Stelle des Sensor 6c ein. In der Fig. 6 ist das Bedienelement 6c gedrückt. Im Gegensatz zur Fig. 4 ist die Signalstärke des Sensors 10b deutlich höher als die Signalstärke des Sensors 10a, weil die Abstandsänderung zwischen dem Sensor 6b und dem Targetelement größer als die Abstandsänderung zwischen dem Sensor 6a und dem Targetelement ist. In der Fig. 5 ist das mittlere Bedienelement 6b gedrückt, welches in der Y-Richtung ungefähr gleichen Abstand jeweils zu den Sensoren 10a und 10b aufweist. Daher sind die Signalstärken der Sensoren 10a und 10b ungefähr gleich. Auf dieser Weise ist es daher durch die unterschiedlichen Vergleichsergebnissen der Signalstärke festzustellen, welches Bedienelement bedient ist. Aus den Vergleichsergebnissen aus den Fig.4 und Fig. 6 ist es zu entnehmen, dass eine Ausführung der vorliegenden Bedienvorrichtung mit zwei Bedienelementen ebenso gut funktionieren kann. In der Fig. 3 ist ein Beispiel mit drei Bedienelementen dargestellt.

Wie oben beschrieben, je nachdem, welches Bedienelement gedrückt ist, reagiert der einzelne Sensor 10a oder 10b unterschiedlich in der Signalstärke. Die. Fig. 3 zeigt lediglich beispielhafte Positionsanordnungen der Sensoren 10a und 10b. Wichtig ist, dass die Sensoren 10a und 10b in der Y-richtung innerhalb des Bedienbereichs bzw. allgemein in der Richtung, wo die Bedienelementreihe ausgerichtet ist, beabstandet zueinander angeordnet sind, damit die Signalstärke der einzelnen Sensoren 10a und 10b wie in der Fig.4 bis 6 abhängig von den Bedienstellen Unterschiede zeigen. Durch das Vergleichen dieser Unterschiede der einzelnen Sensoren wird ausgewertet, welches Bedienelement bedient wird. Daher sind zumindest zwei Sensoren pro Reihe der Bedienelemente erforderlich. Im Idealfall liegen die Sensoren 10a und 10b in Y-Richtung möglich weit weg voneinander und in der X-Richtung mittig in Bezug zur Geometrie der Bedienelemente 6b und 6c, um den negativen Einfluss auf die Signalstärke möglich gering zu halten, falls nicht vorhersehbar ist, wo in der X-Richtung betrachtet, auf dem Bedienelement gedrückt wird.

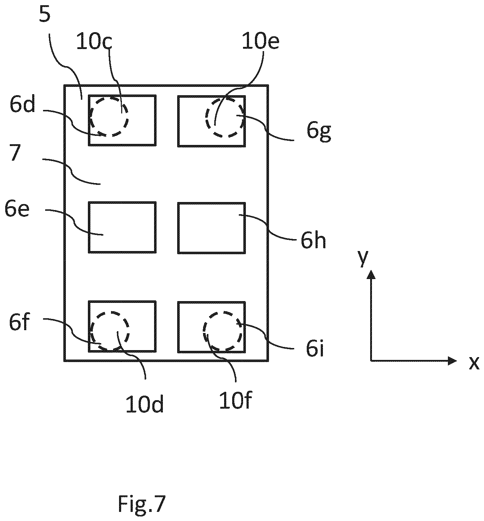

Die Fig 7 zeigt den Bedienbereich 5 einer weiteren Bedienvorrichtung 1 gemäß der vorliegenden Erfindung. Durch den lichtdurchlässigen Bereich 5 ist ein Display 7 mit sechs virtuellen Bedienelementen 6d, 6e, 6f, 6g, 6h und 6i zu sehen, wobei die drei Bedienelemente in drei X-Richtung-Reihen und zwei Y-Richtung-Reihen angeordnet sind. Ähnlich wie im Beispiel gemäß der Fig. 3 ist ein Targetelement (nicht angezeigt in der Fig.7) am Display befestigt, welches alle sechs Bedienelemente messtechnisch abdeckt, damit die Bedienhandlung auf allen Bedienelementen auf die Bewegung des Targetelements umgewandelt werden können. Am unteren Gehäuseteil sind vier Sensoren 10c, 10d, 10e und 10f auf einer Leiterplatte (nicht angezeigt in der Fig.7) angeordnet. Zu jeder einzelnen Sensorreihe sind zwei Sensoren erforderlich zugeordnet. Beispielhaft handelt sich bei den Sensoren 10c, 10d, 10e und 10f um kapazitive Sensoren. Das Targetelement ist eine elektrisch leitende Folie und gilt als die Referenzelektrode für die kapazitiven Sensoren 10c, 10d, 10e und 10f. Die vier Sensoren sind mit gestrichelten Linien dargestellt. Die Darstellung der Sensoren 10c, 10d, 10e und 10f in Fig. 7 dient nur dazu. die relativen Positionen der Sensoren 10a und 10b zu den Bedienelementen zu illustrieren. Jedoch zeigt die Darstellung nicht die einzige Möglichkeit, wie die Sensoren positioniert werden können, damit die Bedienvorrichtung funktionsfähig in Betrieb gebracht wird. Ähnlich wie in der Fig. 3 befinden sich der Sensor 10c in Draufsicht auf dem Bedienbereich betrachtet unter dem Bedienelement 6d, der Sensor 10d unter dem Bedienelement 6f, der Sensor 10e unter dem Bedienelement 6g und der Sensor 10f unter dem Bedienelement 6i. Wenn der Nutzer auf einen von den Bedienelementen 6d bis 6i drückt, ändert sich der Abstand zwischen der Leiterplatte, wo die Sensoren 10c bis 10f fest angeordnet sind, und dem Targetelement. Das Targetelement bewegt sich nicht parallel zur Leiterplatte. Je mehr Bedienkraft auf dem Targetelement partiell einwirkt, desto mehr bewegt sich die entsprechende Stelle des Targetelement zur Leiterplatte.

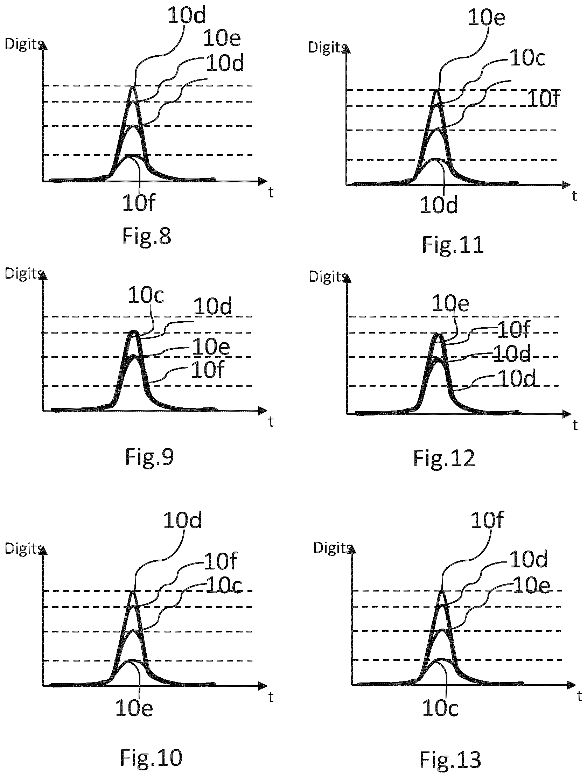

Die Fig.8 bis 13 zeigen die Signalverlaufsdiagramme der Bedienvorrichtung gemäß der Fig.7 in sechs Situationen, wo die virtuellen Bedienelemente 6d bis 6i jeweils gedrückt werden. Hierbei kann sich das Signal jenach fachmännischen Auswerteverfahren um ein Spannungs- oder Frequenz- oder Phasensignal handeln. Es gilt das gleiche Auswertprinzip wie in den Fig. 4 bis 6. Je nachdem, welches Bedienelement gedrückt ist, reagiert der einzelne Sensor 10c, 10d, 10e oder 10f unterschiedlich in der Signalstärke. Für die X-Y-Ebene betrachtet gilt, je entfernter der einzelne Sensor vom Bedienelement liegt, desto geringer ist die Abstandsänderung zwischen dem Sensor und dem Targetelelement an der entsprechenden Stelle und desto geringer die Signalstärke des jeweiligen Sensor sich anzeigt.

Fig. 7 zeigt lediglich beispielhafte Positionsanordnungen der Sensoren 10a und 10b. Ähnlich wie in der Fig. 3. Wichtig ist, dass die Sensoren 10c, 10d, 10e und 10f in den Richtungen, wo die Bedienelementreihen ausgerichtet ist, beabstandet zueinander angeordnet sind, damit die Signalstärke der einzelnen Sensoren 10c, 10d, 10e und 10f wie in der Fig.8 bis 13 abhängig von den Bedienstellen Unterschiede zeigen. Durch das Vergleichen dieser Unterschiede der einzelnen Sensoren wird ausgewertet, welches Bedienelement bedient wird. Daher sind zumindest zwei Sensoren pro Reihe der Bedienelemente erforderlich. Im Idealfall liegen die Sensoren 10c, 10d, 10e und 10f in den Eckbereichen des Bedienbereichs 5, damit diese in den X- und Y-Richtung möglich weit voneinander entfernt liegen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

1 Bedienvorrichtung
2 oberes Gehäuseteil
3 unteres Gehäuseteil
4 elastisch verformbares Kunststoffmaterial
5 Bedienbereich
6, 6a, 6b, 6c, 6d, 6e, 6f, 6g, 6h, 6i virtuelles Bedienelement
7 Display
8 Targetelement
9 Leiterplatte
10, 10a, 10b, 10c, 10d, 10e, 10f Sensor

## Patentansprüche

1. Bedienvorrichtung(1), insbesondere für ein Fahrzeug, umfasst:
ein Gehäuse, welches ein oberes Gehäuseteil(2) und ein unteres Gehäuseteil(3) aufweist, wobei zwischen dem oberen Gehäuseteil(2) und dem unteren Gehäuseteil(3) ein elastisch verformbares Verbindungelement(4) angeordnet ist, wobei das obere Gehäuseteil(2) einen lichtdurchlässigen Bedienbereich(5) mit einer Oberseite aufweist,
ein Display(7) mit einem Targetelement(8), welches auf einer der Oberseite gegenüberliegenden Seite am lichtdurchlässigen Bedienbereich(5) verbunden ist, wobei auf dem Display(7) ein virtuelles Bedienelement(6, 6a, 6b, 6c, 6d, 6e, 6f, 6g, 6h, 6i) anzeigbar ist, wobei bei einer Bedienung des Nutzers auf dem Display(7) das obere Gehäuseteil(2) zumindest partiell relativ zum unteren Gehäuseteil(3) bewegbar ist,
einen Sensor(10, 10a, 10b, 10c, 10d, 10e, 10f) zum Zusammenwirken mit dem Targetelement(8) welcher dazu eingerichtet ist, die relativen Bewegung des oberen Gehäuseteils(2) zum unteren Gehäuseteil(3) zu erfassen.

2. Bedienelement nach Anspruch 1, **dadurch gekennzeichnet, dass** das Display(7) ein bistabiles elektrophoretisches Display ist.

3. Bedienelement nach Anspruch 1 oder 2, **dadurch gekennzeichnet, dass** der Sensor(10, 10a, 10b, 10c, 10d, 10e, 10f) ein induktiver Sensor ist und das Targetelement(8) ein elektrisch leitendes Element ist.

4. Bedienelement nach Anspruch 3, **dadurch gekennzeichnet, dass** mindestens zwei virtuelle Bedienelemente(6, 6a, 6b, 6c, 6d, 6e, 6f, 6g, 6h, 6i)auf dem Display(7) anzeigbar sind, wobei die zumindest zwei virtuellen Bedienelement(6, 6a, 6b, 6c, 6d, 6e, 6f, 6g, 6h, 6i) in einer Reihe ausgebildet sind und für die Reihe zwei induktiven Sensoren zugeordnet sind.

5. Bedienelement nach Anspruch 1 oder 2, **dadurch gekennzeichnet, dass** der Sensor(10, 10a, 10b, 10c, 10d, 10e, 10f) ein kapazitiver Sensor ist und das Targetelement(8) ein elektrisch leitendes Element ist.

6. Bedienelement nach Anspruch 5, **dadurch gekennzeichnet, dass** mindestens zwei virtuelle Bedienelemente(6, 6a, 6b, 6c, 6d, 6e, 6f, 6g, 6h, 6i) auf dem Display anzeigbar sind, wobei die zumindest zwei virtuellen Bedienelement(6, 6a, 6b, 6c, 6d, 6e, 6f, 6g, 6h, 6i) in einer Reihe ausgebildet sind und für die Reihe zwei kapazitiven Sensoren zugeordnet sind.

7. Bedienvorrichtung nach einem der vorhergehenden Ansprüche, **dadurch gekennzeichnet, dass** das Targetelement(8) eine an der der Sichtseite gegenüberliegenden des Displays(7) integrierte Reflexionsfolie ist.

8. Bedienvorrichtung nach einem der vorhergehenden Ansprüche, **dadurch gekennzeichnet, dass** das Targetelement(8) eine separate elektrisch leitende insbesondere metallische Folie ist, die an der der Sichtseite gegenüberliegenden Seite des Displays(7) befestigt ist

9. Bedienelement nach Anspruch 7 oder 8, **dadurch gekennzeichnet, dass** das elektrisch leitende Element während der Bedienung des Nutzers auf dem Display(7) bestromt ist.

10. Verwendungen einer Bedienvorrichtung(1) nach einem der vorhergehenden Ansprüche zum Erfassen einer Bedienhandlung, insbesondere einer Berührung der Bedieneinheit, an einer B-Säule, einem Griff, einem Emblem, einer Klappe, einem Spiegel, einem Dachelement, einem Betätigungselement, einer Instrumententafel, einer Konsole usw. an einem Fahrzeug oder im Fahrzeuginnenraum.
